# EUROPÄISCHE PATENTSCHRIFT

(11) **EP 0 330 813 B1**
(45) Veröffentlichungstag und Bekanntmachung des Hinweises auf die Patenterteilung: **19.05.1993**
(21) Anmeldenummer: 89100372.5
(22) Anmeldetag: 11.01.1989
(51) Int. Cl.: B64C 1/14

(54) **Öffnungsvorrichtung für ein Flugzeugfrachttor**
Opening device for an aircraft freight door
Dispositif d'ouverture pour porte cargo d'avion

(30) Priorität: 02.03.1988 DE 3806688
(43) Veröffentlichungstag der Anmeldung: 06.09.1989
(73) Patentinhaber: Deutsche Aerospace Airbus Gesellschaft mit beschränkter Haftung, 21129 Hamburg (DE)
(72) Erfinder: Kupfernagel, Artur, D-2805 Stuhr 1 (DE); Nitsch, Dieter, D-2870 Delmenthorst (DE)

(56) Entgegenhaltungen:
- US-A- 1 496 965
- US-A- 3 773 311
- US-A- 4 601 446

## Beschreibung

Die Erfindung betrifft eine Öffnungsvorrichtung eines nach außen zu öffnenden Flugzeug-Frachttores, bei der das Frachttor an seiner Oberseite mit wenigstens zwei Scharniergelenken am Flugzeugrumpf angelenkt ist, bei der am oberen Ende eines Frachttorrandspants wenigstens ein Beschlag befestigt ist, über den das Frachttor mit dem Flugzeugrumpf verbunden ist, und bei der ein Koppelglied über Drehgelenke mit dem Frachttorranspant sowie mit einer Schwinge verbunden ist, die an ihrem anderen Ende mit einem Drehgelenk an einem Torrahmenspant des Frachttors angelenkt ist.

Frachttore in Flugzeugen sind wegen ihrer Größe und ihrem Gewicht in der Regel mit Hilfe von Elektromotoren betätigbar. So sind beispielsweise aus der EP-A-0 105 082 und der PCT-WO 84/01761 Vorrichtungen zur Betätigungen von Frachtraumtoren bekannt, bei denen jeweils mit Hilfe von an Elektromotoren angelenkten Hebelgetrieben das Frachttor aus dem Flugzeugrumpf herausgedrückt und nach oben geöffnet wird. Solche elektromotorisch angetriebenen Öffnungsvorrichtungen haben den Vorteil, daß mit ihnen automatisch und ohne manuellen Kraftaufwand Frachttore geöffnet und verschlossen werden können. Nachteilig bei diesen Vorrichtungen ist aber ihre Abhängigkeit von einer funktionsfähigen elektrischen Energieversorgung, ihr im Vergleich zu rein mechanischen Systemen hohes Gewicht sowie eine erhöhte Störanfälligkeit aufgrund zusätzlicher Antriebs-, Steuerungs- und Überwachungseinrichtungen.

Mechanisch betätigbare Öffnungsvorrichtungen für Flugzeugfrachttore, die auf der Basis eines Gewichtsausgleichsmechanismus arbeiten, sind ebenfalls nicht unbekannt. So ist der US-A-4, 601, 446 eine Betätigungsvorrichtung für ein nach innen öffnendes Flugzeugfrachttor zu entnehmen, welches mit Hilfe einer federgeführten Gewichtsausgleichsmechanik ein leichtes Öffnen und Schließen des Tores ermöglicht. Ein Dämpfungselement sorgt zudem dafür, daß die Schließbewegung des Tores abgebremst und gedämpft wird.

Als nachteilig bei dieser Öffnungsvorrichtung ist anzusehen, daß sie in bezug auf ihre Stellmechanik vergleichsweise aufwendig ausgeführt ist. Zudem ist diese Öffnungsvorrichtung für ein nach außen zu öffnendes Tor, bei dem die Lastrichtung über den Öffnungsweg wechselt, nicht verwendbar, da durch eine solche Vorrichtung nur ein Gewichtsausgleich in eine Lastrichtung ermöglicht wird.

Das gleiche gilt für eine aus der DE-A-36 08 735 bekannte, mechanisch zu betätigende Öffnungsvorrichtung für ein in den Flugzeugrumpf zu schwenkendes Frachttor. Diese bekannte Öffnungsvorrichtung verfügt in ihrer Stellmechanik über eine Drehstabfeder, die in der Lage ist, die Gewichtskraft des zu bewegenden Tores über dem gesamten Schwenkbereich abzufangen, der jedoch auch in diesem Fall nur eine Lastrichtung umfaßt.

Schließlich ist aus der US-A-3, 773, 311 eine Betätigungsvorrichtung für Türen von Gepäckablageräumen in Flugzeugkabinen bekannt, bei der mit Hilfe eines Feder-Dämpfungs-Systems eine nach innen öffnende Tür mit annähernd konstanter Betätigungskraft bewegbar ist. Der bei dieser bekannten Anordnung vorgesehene Gewichtsausgleichmechanismus ist zwar prinzipiell auch in der Lage, wechselnde Lastrichtungen zu kompensieren, jedoch ist er nur für vergleichsweise geringe Lasten geeignet.

Aufgabe der Erfindung ist es, eine mechanisch zu betätigende Öffnungsvorrichtung der eingangs genannten Art so auszubilden, daß sie bei einem möglichst einfachen mechanischen Aufbau leicht zu bedienen ist und insbesondere zur Bewegung des Frachttores im wesentlichen nur die Überwindung der Reibungskräfte des Öffnungsund Aufhängemechanismus erfordert.

Die Lösung dieser Aufgabe ergibt sich aus den Merkmalen des Hauptanspruchs, während den Unteransprüchen Weiterbildungen und Ausgestaltungen der Öffnungsvorrichtung zu entnehmen sind.

Mit Hilfe einer Zeichnung läßt sich ein Ausführungsbeispiel der Erfindung erläutern. Es zeigen:
- Fig. 1: ein Systemschaltbild der Getriebetechnik der Öffnungsvorrichtung,
- Fig. 2: ein Schnittbild der Öffnungsvorrichtung bei geschlossenem Frachttor,
- Fig. 3: ein Systemschaltbild mit eingezeichneten wirksam werdenden Kräften,
- Fig. 4: die Federkräfte bei geschlossenem und geöffnetem Frachttor,
- Fig.5-7: Querschnitt durch einen Rumpfabschnitt im Bereich des Frachttores mit der Öffnungsvorrichtung in unterschiedlichen Öffnungsstellungen **und**
- Fig. 8: das Frachttor in Draufsicht am Flugzeugrumpf.

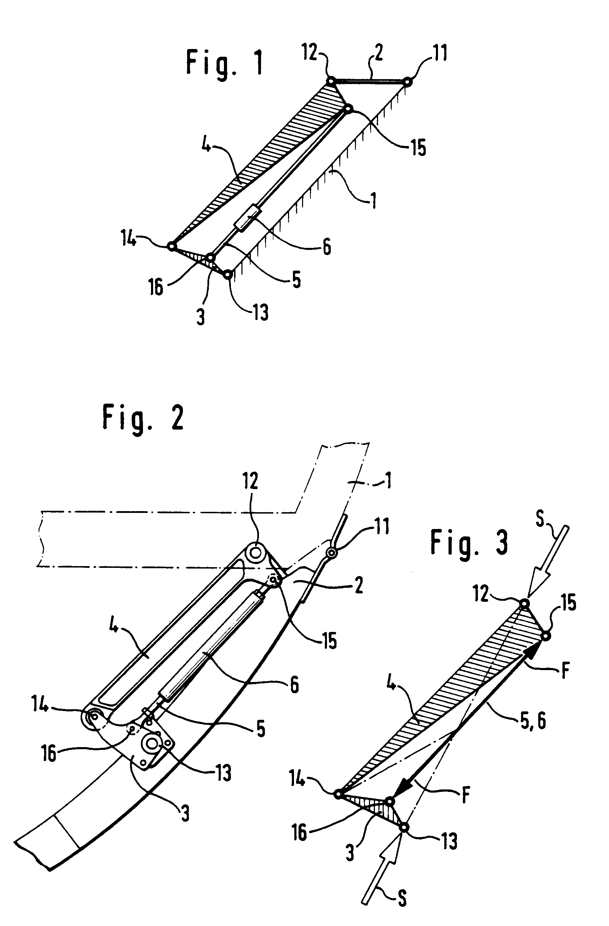

Die Öffnungsvorrichtung für ein in einem Flugzeugrumpf 1 angeordnetes Frachttor 2 verfügt über eine Getriebekinematik , die sich schematisiert als eine sechsgliedrige Kette darstellen läßt, in der das Frachttor 2 mit dem Flugzeugrumpf 1 zum einen direkt und zum anderen über eine Schwinge 3, ein Koppelglied 4, einen Dorn 5 sowie eine Hülse 6 einer Druckfeder indirekt verbunden ist (Fig. 1). Der Verbindungspunkt des Frachttores 2 mit dem Rumpf 1 wird durch ein Schaniergelenk 11 gebildet, während die übrigen Verbindungsstellen von herkömmlichen Drehgelenken 12,13,14,15 und 16 gebildet werden (Fig. 2). Das Drehgelenk 13 ist dabei direkt am Torrahmenspant 10 des Flugzeugrumpfes 1 angelenkt.

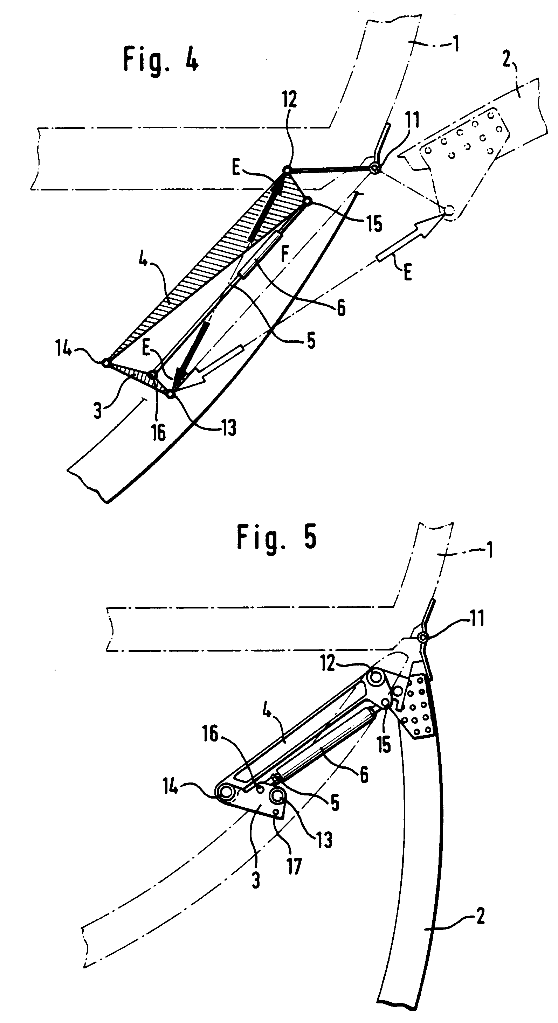

Die Polkonfiguration dieser Kette wurde so ausgelegt, daß sich das Gewichtsmoment im Schaniergelenk 11 einerseits und die Stellkraft der Druckfeder 5,6 andererseits in ihrer Wirkung auf die Kette in jeder Stellung nahezu aufheben, und daß in der Position "Tor geöffnet" (Fig. 4) ein Überschuß an Federwirkung derart vorhanden ist, daß das Frachttor 2 auch bei zusätzlicher Windlast sicher fixiert wird.

In der auf die Kräftewirkung freigemachten Teilkette, bestehend aus den Vorrichtungsteilen Schwinge 3, Koppelglied 4, Druckfeder 5,6 und den Drehgelenken 12,13,14,15 und 16 gemäß Fig. 3 erzeugt die Druckfeder 5,6 mit ihrer Federkraft F ein Moment um das Drehgelenk 14, das von einer Stützkraft S in den Drehgelenken 12 und 13 gestützt wird. Dabei fällt die Wirkungslinie dieser Stützkraft S immer mit der Verbindungslinie zwischen den Drehgelenken 12 und 13 zusammen. Somit wirkt die gesamte Teilkette wie eine Ersatzfeder E, die direkt zwischen den Drehgelenken 12 und 13 angeordnet ist ( Fig. 4). Durch eine gezielte Wahl der Lage der Gelenkpunkte der Drehgelenke 15 und 16 läßt sich die Kennlinie der Ersatzfeder E verändern.

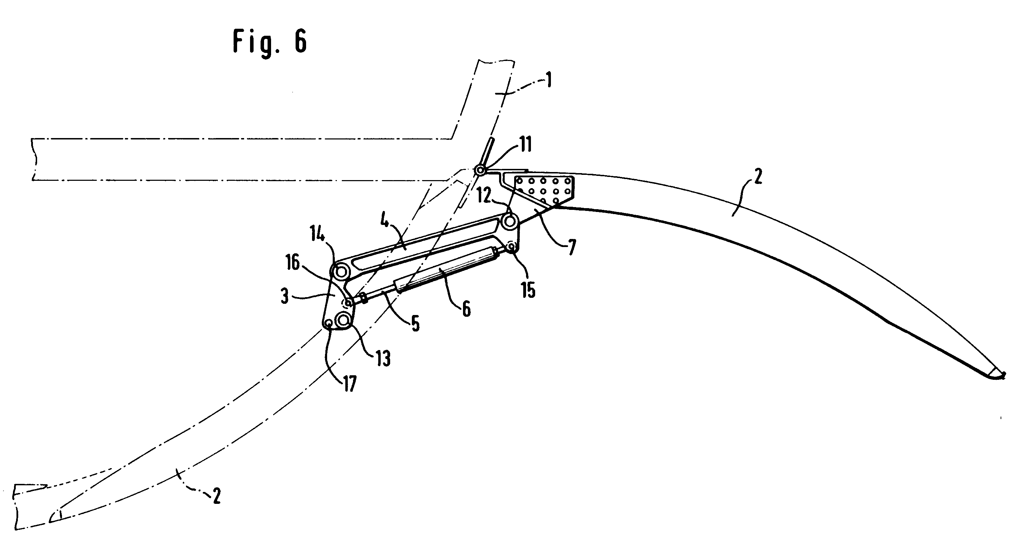

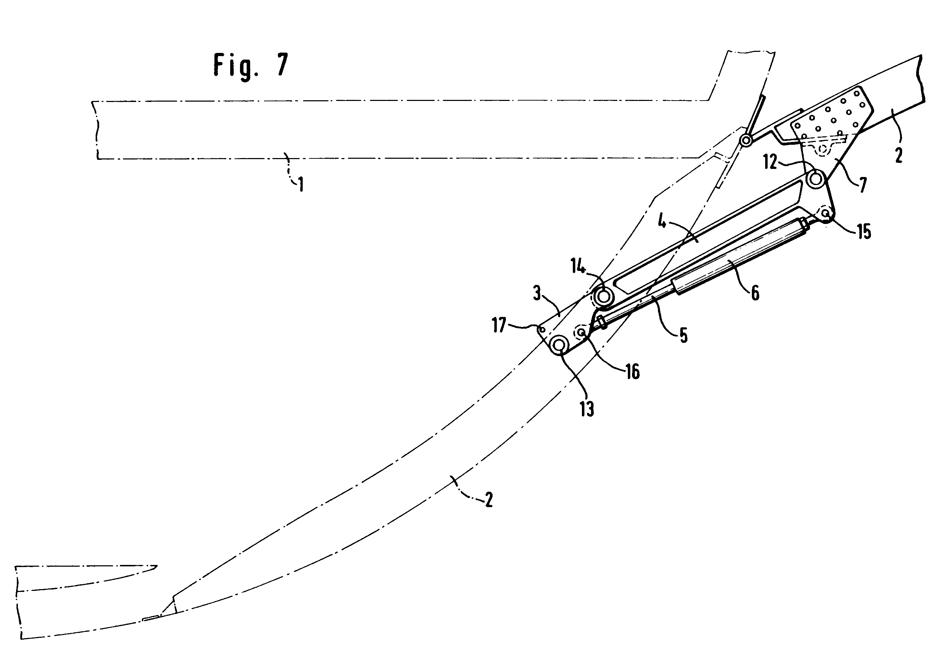

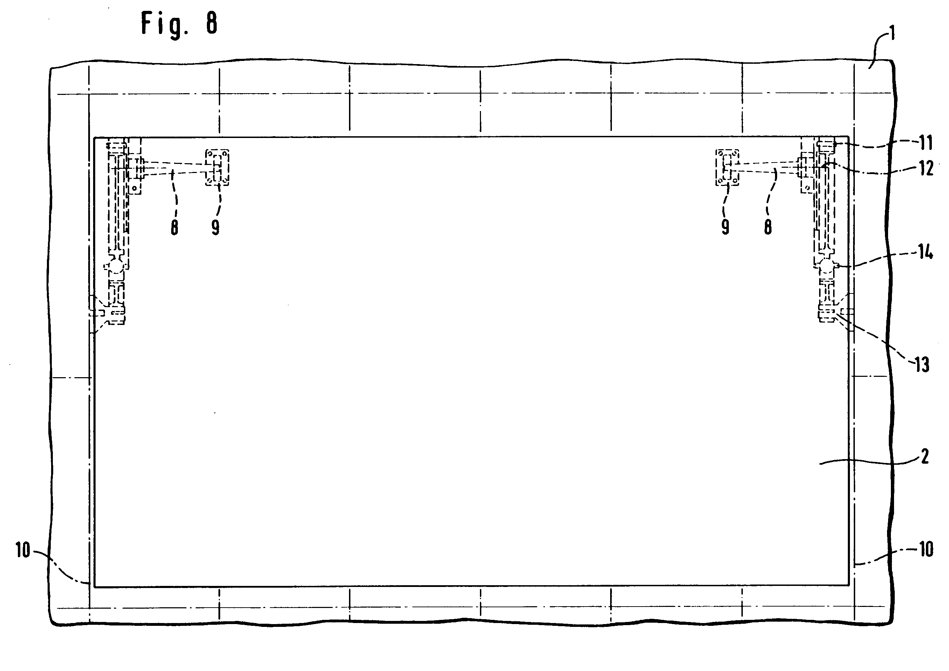

In den Figuren 5 bis 8 ist eine Detaildarstellung eines Ausführungsbeispiels der Öffnungsvorrichtung zu entnehmen. Während die Fig. 5 bis 7 einen Querschnitt durch einen Rumpfabschnitt im Bereich der Öffnungsvorrichtung in unterschiedlichen Öffnungsstellungen des Frachttores 2 zeigen, ist in Fig. 8 eine Draufsicht auf den Flugzeugrumpf 1 mit dem Frachttor 2 und der Öffnungsvorrichtung dargestellt.

Das Frachttor 2 ist, wie die Fig. 5 bis 8 zeigen, an seiner stromaufwärtigen und an der stromabwärtigen Oberseite über wenigstens ein Schaniergelenk 11 am Flugzeugrumpf 1 befestigt. Am oberen Ende eines Frachttorspants ist ein Beschlag 7 angebracht, der in einem ersten Drehgelenk 12 das obere Ende des Koppelgliedes 4 fliegend lagert. Das untere Ende des Koppelgliedes 4 ist durch ein zweites Drehgelenk 14 mit der Schwinge 3 verbunden, die an einem Torrahmen 10 des Flugzeugrumpfes in einem dritten Drehgelenk 13 ebenfalls fliegend gelagert ist. An der Schwinge 3 ist schließlich in einem vierten Drehgelenk 16 der Dorn 5 einer Druckfeder angeordnet, deren Hülse 6 am oberen Ende des Koppelgliedes 4 in einem fünften Drehgelenk 15 befestigt und im wesentlichen parallel zu diesem Koppelglied 4 angeordnet ist. Aus Sicherheitsgründen ist die Öffnungsmechanik doppelt vorhanden und jeweils am stromaufwärtigen und am stromabwärtigen Ende des Frachttores angebracht.

## Patentansprüche

1. Öffnungsvorrichtung eines nach außen zu öffnenden Flugzeug-Frachttores (2), bei der das Frachttor (2) an seiner Oberseite mit wenigstens zwei Scharniergelenken (11) am Flugzeugrumpf (1) angelenkt ist, bei der am oberen Ende eines Frachttorrandspants wenigstens ein Beschlag (7) befestigt ist, über den das Frachttor (2) mit dem Flugzeugrumpf (1) verbunden ist, und bei der ein Koppelglied (4) über Drehgelenke (12,14) mit dem Frachttorranspant sowie mit einer Schwinge (3) verbunden ist, die an ihrem anderen Ende mit einem Drehgelenk (13) an einem Torrahmenspant (10) des Frachttors (2) angelenkt ist, dadurch gekennzeichnet, daß das mit dem Frachttorrandspant verbundene Ende des Koppelgliedes (4) am Beschlag (7) sowie die Schwinge (3) am Torrahmenspant (10) jeweils fliegend gelagert sind, wobei ein drittes Drehgelenk (16) der Schwinge (3) zwischen den endseitigen Drehgelenken (13,14) angeordnet ist, wobei an diesem dritten Drehgelenk der Schwinge (3) eine Druckfeder (5,6) angelenkt ist, die im wesentlichen parallel zum Koppelglied (4) verläuft und deren zweiter Lagerpunkt in einem dritten Drehgelenk (15) des Koppelgliedes (49 am Beschlag (7) benachbart ist, jedoch einen Abstand in Öffnungsrichtung des Frachttores (2) vom Anlenkpunkt (12) des Koppelglieds (4) am Beschlag (7) aufweist, und wobei die Ausgestaltung der Schwinge (3), des Koppelglieds (4) und des Beschlags (7) sowie die Lage der Drehgelenke (12, 13, 14, 15, 16) und der Scharniergelenke (11) dergestalt ist, daß die Länge der Druckfeder (5, 6) in einer bestimmten Frachttorstellung zwischen der völlig geöffneten und der völlig geschlossenen Position ein Minimum erreicht und bei Bewegung des Frachttores (2) von dieser Zwischenstellung aus in Öffnungs- bwz. Schließrichtung zunimmt.

2. Öffnungsvorrichtung gemäß Anspruch 1, dadurch gekennzeichnet, daß die Stellglieder der Öffnungsmechanik jeweils am vorderen und am hinteren Ende des Frachttores (2) angebracht sind.

3. Öffnungsvorrichtung gemäß Anspruch 1 und 2, dadurch gekennzeichnet, daß die Druckfeder (5,6) aus einer Gasdruckfeder besteht.

4. Öffnungsvorrichtung gemäß einem der Ansprüche 1 bis 3, dadurch gekennzeichnet, daß sich das Frachttor (2) mit Hilfe eines in die Schwinge (3) am Ort (17) zu steckenden Sicherungsstiftes gegenüber dem Torrahmenspant (40) blockieren läßt.

5. Öffnungsvorrichtung gemäß einem der Ansprüche 1 bis 4, dadurch gekennzeichnet, daß die Gelenke (14,15,16) zum Ausgleich von Achswinkelfehlern mit Gelenklagern versehen sind.

## Claims

1. An opening mechanism for an outwardly opened aircraft cargo door (2), wherein the cargo door (2) is pivotally connected at its upper end to the fuselage (1), by means of at least two hinges (11), wherein at least one fitting (7) is attached to the upper end of a frame round the edge of the cargo door, whereby the door (2) is connected to the fuselage (1) and wherein a coupling member (4) is joined by hinges (12, 14) to the frame round the edge of the door and to a crank member (3), which is pivotally connected at its other end by a hinge (13) to a door frame (10) of the cargo door (2), characterised in that the end of the coupling member (4) joined to the frame round the edge of the door is mounted in an overhung position on the fitting (7), and the crank member (3) is similarly mounted on the door frame (10), a third hinge (16) of the crank member (3) being arranged between the hinges (13, 14) at the end, a compression spring (5, 6) being connected to this third hinge of the crank member (3), the spring extending substantially parallel with the coupling member (4), and its second bearing point, in a third hinge (15) of the coupling member (4), being adjacent to the fitting (7) but spaced in the opening direction of the door (2) from the pivotal point (12) of the coupling member (4) on the fitting (7), and the construction of the crank (3), the coupling member (4) and the fitting (7) and the position of the hinges (12, 13, 14, 15, 16) and the hinges (11) is such that the length of the compression spring (5, 6) reaches a minimum in a certain position of the freight door between the fully open and closed position, and increases as the freight door (2) moves out from that intermediate position in the opening or closing direction.

2. An opening mechanism according to claim 1, characterised in that the adjusting members of the opening mechanism are mounted at both the front and rear ends of the cargo door (2).

3. An opening mechanism according to claims 1 and 2, characterised in that the compression spring (5, 6) comprises a gas compression spring.

4. An opening mechanism according to any of claims 1 to 3, characterised in that the cargo door (2) can be blocked against the door frame (40) by means of a locking pin which can be inserted in the crank member (3) at location (17).

5. An opening mechanism according to any of claims 1 to 4, characterised in that the hinges (14, 15, 16) are provided with pivot bearings to compensate for errors in angles between axes.

## Revendications

1. Dispositif d'ouverture d'une porte de soute d'avion (2) s'ouvrant vers l'extérieur, cette porte de soute (2) étant articulée par au moins deux articulations à charnière (11) prévues à son côté supérieur, sur le fuselage (1), au moins une ferrure (7) étant fixée à l'extrémité supérieure d'une membrure de porte de soute, cette ferrure reliant la porte de soute (2) au fuselage (1), et un organe de liaison (4) étant relié par des articulations de rotation (12, 14) à la membrure de porte de soute ainsi qu'à une coulisse (3) dont l'autre extrémité est articulée par une articulation rotative (13) à une autre membrure de cadre de porte (10) de la porte de soute (2), dispositif caractérisé en ce que l'extrémité de l'organe de liaison (4) reliée à la membrure de cadre de porte de soute est montée flottante chaque fois sur la ferrure (7) et la coulisse (3) sur la membrure de cadre de porte (10), une troisième articulation rotative (16) de la coulisse (3) étant prévue entre les articulations rotative d'extrémité (13, 14), un ressort de compression (5, 6) étant prévu à cette troisième articulation rotative de la coulisse (3), ce ressort étant essentiellement parallèle à l'organe de liaison (4) et son second point d'articulation étant voisin d'un troisième point rotative (15) de l'organe de liaison (4, 9) sur la ferrure (7), en étant toutefois à une certaine distance du point d'articulation (12) de l'organe de liaison (4) sur la ferrure (7), dans la direction d'ouverture de la porte de soute (2), la réalisation de la coulisse (3), de l'organe de liaison (4) et de la ferrure (7) ainsi que la position de l'articulation rotative (12, 13, 14, 15, 16) et de l'articulation de charnière (11) étant telles que la longueur du ressort de compression (5, 6) dans une position de porte de soute déterminée, entre la position d'ouverture complète et celle de fermeture complète, atteigne un minimum et qu'en cas de mouvement de la porte de soute 2, à partir de cette position intermédiaire, la longueur augmente dans la direction de l'ouverture et celle de fermeture.

2. Dispositif d'ouverture selon la revendication 1, caractérisé en ce que les organes de positionnement du mécanisme d'ouverture sont chaque fois prévus à l'extrémité avant et à l'extrémité arrière de la porte de soute 2.

3. Dispositif d'ouverture selon la revendication 1 et 2, caractérisé en ce que le ressort de compression (5, 6) est un ressort de compression à gaz.

4. Dispositif d'ouverture selon l'une des revendications 1 à 3, caractérisé en ce que la porte de soute (2) peut se bloquer par rapport à la membrure de cadre de porte (10) à l'aide d'une tige de sécurité qui se place dans la coulisse (3) à l'emplacement (17).

5. Dispositif d'ouverture selon l'une des revendications 1 à 4, caractérisé en ce que les articulations (14, 15, 16) ont des paliers articulés pour compenser les défauts d'angles d'axes.
